# EUROPEAN PATENT SPECIFICATION

(11) **EP 3 035 654 B1**
(45) Date of publication and mention of the grant of the patent: **29.08.2018**
(21) Application number: 15196388.1
(22) Date of filing: 25.11.2015
(51) Int. Cl.: H04M 1/725

(54) **METHOD AND APPARATUS FOR CONTROLLING DISPLAY OF MOBILE COMMUNICATION DEVICE**
VERFAHREN UND VORRICHTUNG ZUR STEUERUNG DER ANZEIGE VON EINER MOBILKOMMUNIKATIONSVORRICHTUNG
PROCÉDÉ ET APPAREIL POUR COMMANDER L'AFFICHAGE D'UN DISPOSITIF DE COMMUNICATION MOBILE

(30) Priority: 26.11.2014 US 201414555166
(43) Date of publication of application: 22.06.2016
(73) Proprietor: BlackBerry Limited, Waterloo, ON N2K 0A7 (CA)
(72) Inventor: BAYNE, Ryan Mitchell, Waterloo, Ontario N2K 0A7 (CA); PURDY, Michael Lorne, Waterloo, Ontario N2K 0A7 (CA); GIBSON, Ryan, Cambridge, Ontario N3C 3Y5 (CA)
(74) Representative: Hanna Moore + Curley

(56) References cited:
- EP-A1- 2 755 410
- EP-A2- 1 274 062
- EP-A2- 1 720 149
- WO-A1-2011/045410
- US-A1- 2009 009 527

## Description

### Technical Field

The present application relates generally to the operation of mobile communication devices and particularly to controlling the display screen characteristics of such devices. The present application has particular application in the context of battery powered devices.

### Background

The use of communication devices, and in particular mobile communication devices such as smartphones and the like, has extended to allow a user to receive voice calls and to send and receive electronic communications, which may include e-mail, short message service (SMS), multimedia messaging service (MMS) and video messaging service (VMS) messages, as well as other forms of messages. This messaging is typically provided in one or more modules which are executable within a processor of the device and which are individually accessible by a user on demand.

Access to these module is provided via a graphical user interface. Specific modules or functionality is associated with a menu arrangement or display icons. By selection of an appropriate icon, the user is provided with a facility to activate or interact with an appropriate module.

It is known that both the brightness and contrast of a display can affect displayed image quality, display viewability and readability of the graphical user interface that is rendered on that display. Many mobile communication devices are provided with a brightness control which allows a user to manually vary the brightness of the display based on ambient light conditions. Some devices include a light sensor that allows the brightness to automatically change based on the ambient light conditions. The intent of such arrangements is to dim the brightness level of the display when the display is being viewed in dim or dark conditions. In contrast where the device is used in bright conditions- such as outside- then the display brightness is increased to reduce the effect of glare from ambient light which can wash out the image and also to compensate for the user's eyes and their reduced sensitivity as ambient light levels increase. However to date many automatic brightness level sensor arrangements do not function appropriately with the result that a user will manually override such functionality. Given the fact that the display can be responsible for up to about 50% of device power requirements, inappropriate display properties can have a serious effect on a devices operating time between recharge of its battery.

There is a further problem associated with the display properties of a device and this relates to users who have low visual acuity. Such users have visual difficulties in discriminating between elements displayed on a typical screen. Typical solutions provided to address these problems eliminate colour completely and provide a grayscale display or invert colours provided on the screen.

The document EP 1274062 A2 discloses an electronic device having two display units. The document EP 1720149 A2 discloses a display device whose display is visible in a dark place or under strong external light. The document WO 2011/045410 A1 discloses a display device having a plurality of picture elements, one active matrix and a display area, the display area including a first area and a non-overlapping second area.

### Summary

Accordingly there is provided a method, device and computer program as detailed in the claims that follow.

### Brief Description of the Drawings

In drawings which illustrate by way of example only embodiments of the present application,
Figure 1 is a block diagram of an embodiment of a computing device.
Figure 2 is a schematic diagram of an exemplary network topology for use with the computing device of Figure 1.
Figure 3 is a process flow showing a methodology in accordance with the present teaching.
Figure 4 is a process flow showing a methodology in accordance with the present teaching
Figure 5 is a of an exemplary generated graphical user interface in accordance with the present teaching.

### Detailed Description

The embodiments described herein provide a system, method and apparatus for controlling the display screen characteristics of mobile telecommunication devices and particularly as part of generation of a graphical user interface. In changing the display characterisitics, the present teaching provides a user with improved visual contrast to elements displayed on as screen and can also reduce the power consumption requirements of the display.

This is particularly advantageous when utilised in the context of devices which utlize a touch screen user interface where it is important that the user can readily identify menu options or displayed icons to faciliate operation of the device.

By providing such an improved user interface it is possible in accordance with the present teaching to improve user accesibility to functions of the device. This can have a beneficial effect on the performance of the device. It will be appreciated that as these mobile telecommunication devices are battery powered that the performance of the battery is critical. As mentioned above, the characteristics of a display can have a serious effect on battery consumption and any improvement in the display has a corresponding effect on the battery consumption.

The present teaching is particuarly advantageous in the context of displays that are fabricated with organic light emitting diodes, OLEDs. OLED displays operate without a need for a backlight and can be thinner and lighter than other displays such as those based on LCD technology. They have therefore found increased usage in mobile telecommunication devices where the size and weight of the device is a critical design criteria. Their operating performance such as depth of colour and achievable contrast is greater than displays based on other technologies.

OLED displays are capable of displaying full colour in accordance with an RGB colour model. The present inventors have realised that in the context of an OLED display, and particularly an OLED full colour display, that the provision of a yellow on black or black on yellow contrast provides improved contrast in bright conditions over simply increasing the overall brightness levels of the display. By judiciously selecting certain icons or menu items to display yellow on black, or black on yellow, the present inventors have realised that the achievable contrast assists in viewing the display in high ambient light levels. Where combined with a light sensor which will automatically activate this contrast mode, the present teaching provides a reduction in power consumption as compared to a white display, as only the red and green subpixels are required and blue can remain off. Furthermore and somewhat counter-intuitively at first the present inventors have realised that full intensity yellow can have a higher luminance than full intensity white due to panel loading effects associated specifically with OLED displays. This may also be combined with current limiting features in an OLED driver integrated circuit which can judiciously reduce the white luminance further, therefore providing further advantages for yellow/black combinations in terms of contrast.

It will be appreciated that a contrast mode provided in accordance with the present teaching does not have to be applied to an entire screen display. For example instead of changing the whole screen to adopt the yellow on black or black on yellow contrast mode, a system and method in accordance with the present teaching may be configured to activate individual user interface elements so as to selectively identify these in the interest of accessibility. This could be done as either an option in the preferences or in response to the ambient light sensor. Such functionality could be extended across the operating system, e.g. navigation bar at bottom of browser is changed to yellow/black without altering the content of the webpage, etc.

In certain configurations, which have particular application for users with low visual acuity, a yellow/black mode per the present teaching can be enabled all the time.

In a first exemplary arrangement a method of generating at least a portion of a graphical user interface on the display of a device using only a two color yellow and black combination is provided. In this context the present teaching provides a first display mode which is capable of using all colors within an RGB color model when displaying graphical elements as part of the graphical user interface, GUI, on the display. In addition to this first display mode, the present teaching also provides a second display mode which only uses combination of yellow and black for displaying graphical elements as part of the GUI. The use of this second display mode uses the high contrast between the yellow and black to assist viewing of the elements that are displayed using this second display mode.

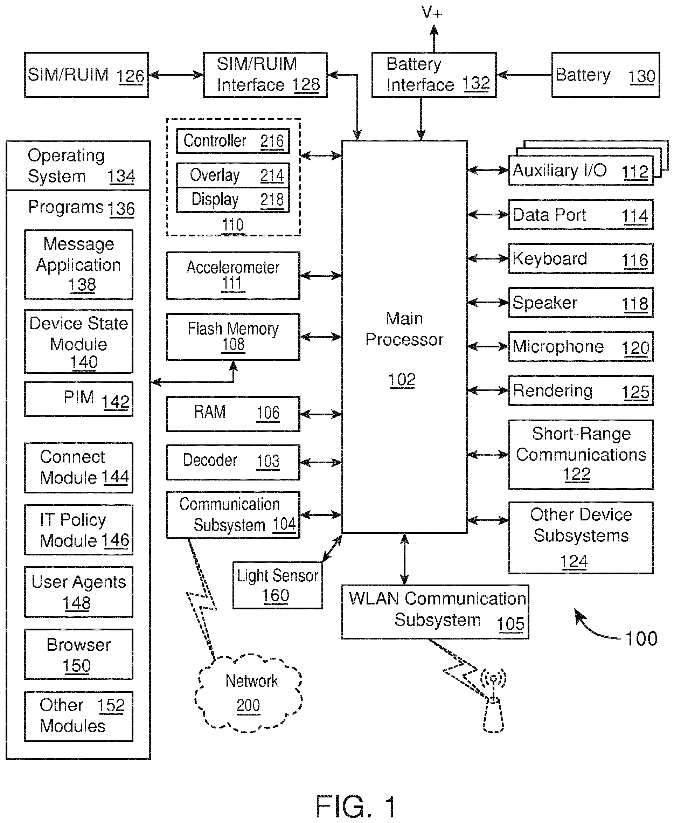

The example embodiments will be described and illustrated primarily in relation to computing devices such as communication devices that are adapted to allow a user communicate wirelessly with various types of networks, particularly those devices that are adapted to communicate with another communication or data processing device over a fixed or wireless connection and being provided with voice communication capabilities. The computing device can be adapted to process data and carry out operations on data in response to user commands for any number of purposes, including productivity and entertainment. Thus, the embodiments described herein may be implemented on computing devices adapted for content browsing, communication or messaging, including without limitation cellular phones, smartphones, wireless organizers, personal digital assistants, , laptops, tablets, handheld wireless communication, typically telecommunication, devices, notebook computers, ebook readers, entertainment devices such as MP3 or video players, and the like. Figure 1 is a block diagram of an exemplary embodiment of a computing device 100. The computing device 100 includes a number of components such as a main processor 102 that controls the overall operation of the computing device 100. Communication functions, including data and voice communications, are performed through a communication subsystem 104. Data received by the computing device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the computing device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the computing device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems.

The mobile device 100 may be provided with additional communication subsystems, such as the wireless LAN (WLAN) communication subsystem 105 also shown in Figure 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. As noted above, voice communication capabilities and connectivity to voice-centric networks is not mandatory for the operation of the computing device 100 with the within embodiments. Thus, the wireless communication subsystem 104 may be omitted. If so, optionally a dongle or other peripheral device (not shown) may be connected to the device 100 to provide the device 100 with access to the wireless network 200.

The main processor 102 also interacts with additional subsystems such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, the short-range communications 122 and other device subsystems 124. Each interaction causes a power event that has an effect on the battery consumption of the device. Certain subsystems are more intensive power consumers than other subsystems.

The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display assembly 110 in response to a determination of the current orientation of the device 100.

In some embodiments, the user device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. Indeed the present teaching is particularly suited for such touchscreen display interfaces as the screens of these devices provide the user interface to the device and as it is important that a user can readily identify certain user interface elements relative to other user interface elements. It will be appreciated however that the present teaching is not to be construed as being limited to only touchscreen devices as the provision of a high contrast display in the context of user readability has application and benefit for non-touch screen devices.

The touchscreen display interface 110 may be the principal user interface provided on the device 100, although in some embodiments, additional buttons, variously shown in the figures or a trackpad, or other input means may be provided. In one embodiment, an OLED screen 218 is overlaid with a clear touch sensor assembly 214 that supports single and multi-touch actions such as tap, double-tap, tap and hold, tap and drag, scroll, press, flick, and pinch. The touchscreen display interface 110 detects these single and multi-touch actions, for example through the generation of a signal or signals in response to a touch, which may then be processed by the processor 102 or by an additional processor or processors in the device 100 to determine the location of the touch action, whether defined by horizontal and vertical screen position data or other position data. Touch location data may include an area of contact or a single point of contact, such as a point at or near a center of the area of contact. The touchscreen display interface 110 may be provided with separate horizontal and vertical sensors or detectors to assist in identifying the location of a touch. A signal is provided to the controller 216, shown in Figure 1, in response to detection of a touch. The controller 216 and/or the processor 102 may detect a touch by any suitable contact member on the touch-sensitive display 110. It will be appreciated that this touch interface is exemplary of the type of user interaction that may be provided to a user to allow activation of specific functions on the computing device. Other interface means may include those that make use of voice commands or other non-tactile interaction.

Some of the subsystems of the computing device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file which is accessed from one or more identifiable data stores within the device is to be viewed on the display 110, the rendering circuit 125 analyses and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The computing device 100 can send and receive communication signals over the wireless network 200 after required network registration or activation procedures have been completed. Network access is associated with a subscriber or user of the computing device 100. To identify a subscriber, the computing device 100 requires a SIM/RUIM/UICC card 126 (i.e. Subscriber Identity Module, Removable User Identity Module, Universal Integrated Circuit Card, or the like) or another suitable identity module to be inserted into a SIM/RUIM/UICC interface 128 in order to communicate with a network. The SIM/RUIM/UICC card 126 is one type of a conventional "smart card" that can be used to identify a subscriber of the computing device 100 and to personalize the computing device 100, among other things. Without the SIM/RUIM/UICC card 126, the computing device 100 is not fully operational for communication with the wireless network 200. By inserting the SIM/RUIM/UICC card 126 into the SIM/RUIM/UICC interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM/UICC card 126 includes a processor and memory for storing information. Once the SIM/RUIM/UICC card 126 is inserted into the SIM/RUIM/UICC interface 128, it is coupled to the main processor 102. In order to identify the subscriber, the SIM/RUIM/UICC card 126 can include some user parameters such as an International Mobile Subscriber Identity (IMSI). An advantage of using the SIM/RUIM/UICC card 126 is that a subscriber is not necessarily bound by any single physical mobile device. The SIM/RUIM/UICC card 126 can store additional subscriber information for a mobile device as well, including datebook (or calendar) information and recent call information. Alternatively, user identification information can also be programmed into the flash memory 108.

The computing device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the computing device 100. Although current technology makes use of a battery, future technologies such as micro fuel cells can provide the power to the computing device 100.

The device may also include a light sensor 160 that is configured to sense ambient light conditions.

The computing device 100 also includes an operating system 134 and software components 136 to 152 which are described in more detail below. The operating system 134 and the software components 136 to 152 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 138 to 152, such as specific device applications, or parts thereof, can be temporarily loaded into a volatile store such as the RAM 106. Select other modules 152 may also be included, such as those described herein. Other software components can also be included, as is well known to those skilled in the art.

The subset of software applications 136 that control basic device operations, including data and voice communication applications, will normally be installed on the computing device 100 during its manufacture. Other software applications include a message application 138 that can be any suitable software program that allows a user of the computing device 100 to send and receive electronic messages. Various alternatives exist for the message application 138 as is well known to those skilled in the art. Messages that have been sent or received by the user are typically stored in the flash memory 108 of the computing device 100 or some other suitable storage element in the computing device 100. In at least some embodiments, some of the sent and received messages can be stored remotely from the device 100 such as in a data store of an associated host system with which the computing device 100 communicates.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the computing device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200.

PIM data items can be seamlessly integrated, synchronized, and updated via the wireless network 200 with the mobile device subscriber's corresponding data items stored and/or associated with a host computer system. This functionality creates a mirrored host computer on the computing device 100 with respect to such items. This can be particularly advantageous when the host computer system is the mobile device subscriber's office computer system. Some or all of the data items stored at the computing device 100 may be indexed for searching on the device 100 either through a corresponding application, such as the PIM 142, or another suitable module. In addition, the items may be searchable using a unified search process implemented in the device operating system 134. For example, application data items can be encapsulated in a searchable entity class and registered with a unified search engine on the device 100 that executes searches against all registered data repositories on the device based on received queries. The search engine can also be configured to invoke a search process of external resources, such as Internet search engines or remote databases. In the context of entering data directly onto the computing device through the computing device, it will be appreciated and understood however that the functionality available to user of the computing device is typically less than that available to the user of the host computer system.

The computing device 100 also includes a connect module 144, and an information technology (IT) policy module 146. The connect module 144 implements the communication protocols that are required for the computing device 100 to communicate with the wireless infrastructure and any host system, such as an enterprise system, with which the computing device 100 is authorized to interface.

The connect module 144 includes a set of Application Programming Interfaces (APIs) that can be integrated with the computing device 100 to allow the computing device 100 to use any number of services associated with the enterprise system or with other systems accessible over the network 200. The connect module 144 allows the computing device 100 to establish an end-to-end secure, authenticated communication pipe with the host system. A subset of applications for which access is provided by the connect module 144 can be used to pass IT policy commands from the host system to the computing device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the computing device 100, such as browsers 150, other user agents 148, and other modules 152. These software applications can be third party applications, which are added after the manufacture of the computing device 100. Other examples of third party applications include games, calculators, utilities, etc.

The additional applications can be loaded onto the computing device 100 through at least one of the wireless network 200, the auxiliary I/O subsystem 112, the data port 114, the short-range communications subsystem 122, or any other suitable device subsystem 124. This flexibility in application installation increases the functionality of the computing device 100 and can provide enhanced on-device functions, communication-related functions, or both. For example, secure communication applications can enable electronic commerce functions and other such financial transactions to be performed using the computing device 100.

The data port 114 enables a subscriber to set preferences through an external device or software application and extends the capabilities of the computing device 100 by providing for information or software downloads to the computing device 100 other than through a wireless communication network. The alternate download path can, for example, be used to load an encryption key onto the computing device 100 through a direct and thus reliable and trusted connection to provide secure device communication. The data port 114 can be any suitable port that enables data communication between the computing device 100 and another computing device. The data port 114 can be a serial or a parallel port. In some instances, the data port 114 can be a USB port that includes data lines for data transfer and a supply line that can provide a charging current to charge the battery 130 of the computing device 100.

The short-range communications subsystem 122 provides for communication between the computing device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the computing device 100 is substantially similar, except that the received signals are output to the speaker 118, and signals for transmission are generated by the microphone 120. Alternative voice or audio I/O subsystems, such as a voice message recording subsystem, can also be implemented on the computing device 100. Although voice or audio signal output is accomplished primarily through the speaker 118, the display 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the computing device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 or a WPAN communication subsystem, not shown, may be provided with similar components as those described above configured for communication over the appropriate frequencies and using the appropriate protocols. The particular design of the communication subsystem 104, 105, or other communication subsystem is dependent upon the communication network 200 with which the computing device 100 is intended to operate. Thus, it should be understood that the foregoing description serves only as one example.

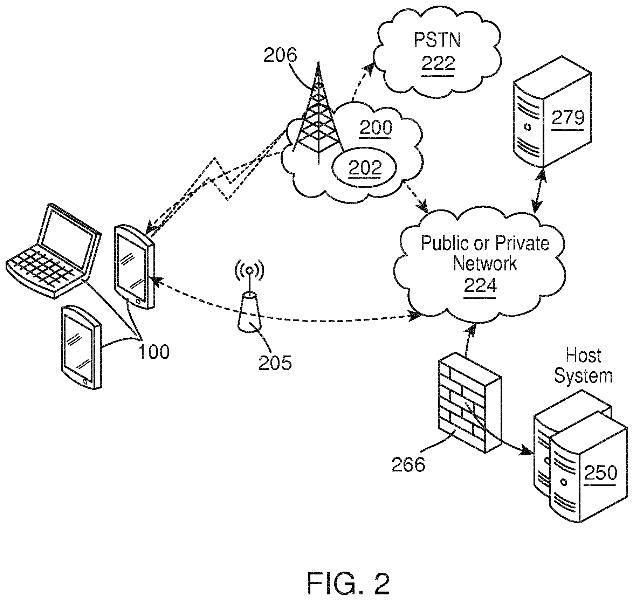

Figure 2 illustrates a possible network topology for the computing device 100, including paths for data and voice traffic, and including a host or enterprise system 250. The host or enterprise system 250 will typically be a corporate enterprise or other local area network (LAN), but can also be a home office computer or some other private or quasi-private system, for example a subscription-based Internet service. Typically, a number of communication devices 100 can communicate wirelessly with the host or enterprise system 250 through one or more nodes 202 of the wireless network 200.

The host or enterprise system 250 comprises a number of network components, not shown, connected to each other by a network. Within the system 250, for example, user (including administrator) computers may be situated on a LAN connection, and one or more of these desktop computers can be provided with connection facilities for loading information (e.g. PIM data, private symmetric encryption keys to facilitate secure communications) from the user computer to the computing device 100, and can be particularly useful for bulk information updates often performed in initializing the computing device 100 for use. To facilitate the operation of the computing device 100 and the wireless communication of messages and message-related data between the computing device 100 and components of the host system 250, a number of wireless communication support components are provided within the system 250 (not shown). In some implementations, the wireless communication support components can include one or more data stores, a message management server, a mobile data server, a web server, such as Hypertext Transfer Protocol (HTTP) server, a contact server, and a device manager module including an information technology policy server and editor. HTTP servers can also be located outside the host or enterprise system, as indicated by the HTTP server 279 attached to the network 224. The mobile data server can also connect to the Internet or other public network through an enterprise HTTP server or other suitable web server such as a File Transfer Protocol (FTP) server, to retrieve webpages and other data. Requests for webpages are typically routed through mobile data server and then to the enterprise HTTP server, through suitable firewalls and other protective mechanisms. The web server then retrieves the webpage over the Internet, and returns it to mobile data server. The mobile data server is typically provided, or associated, with an encoder that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the computing device 100 via the shared network infrastructure 224 and the wireless network 200. Those skilled in the art know how to implement these various components. Other components can also be included as is well known to those skilled in the art.

The computing device 100's access to IP networks and to a public switched telephone network (PSTN), if applicable, can be provided through the wireless network 200, which comprises one or more nodes 202 configured for communication in accordance with a suitable mobile telephony standard. In turn, the wireless network 200 provides the computing device 100 with connectivity to the Internet or other public wide area network 224, and thence to the host or enterprise system 250. At the same time, if the computing device 100 is a multiple-mode device, it may also communicate with the host or enterprise system 250 over an enterprise LAN or WLAN, represented by the access point 205. It will be appreciated by those skilled in the art, however, that access to the host system 250 need not be limited to access via the enterprise network (whether wireless or not). Instead, the computing device 100 may access the host or enterprise system 250 over another network, such as the wide area IP network 224, via different access means, such as an access point located at the communication device user's home, or at a public or private Wi-Fi hotspot.

In this exemplary embodiment, the computing device 100 communicates with the host or enterprise system 250 through node 202 of the wireless network 200 and a shared network infrastructure 224 such as a service provider network or the public Internet. Access to the host or enterprise system can be provided through one or more routers (not shown), and computing devices of the host or enterprise system 250 can operate from behind a firewall or proxy server 266. A proxy server provides a secure node and a wireless internet gateway for the host or enterprise system 250. The proxy server intelligently routes data to the correct destination server within the host or enterprise system 250.

For some wireless networks 200 or LANs 205, the computing device 100 may be registered or activated with the respective network. A process for identifying a subscriber to a cellular network using a SIM or other identifier card 126 is described above. Other methods of registering or identifying the computing device 100 to various networks will be known to those of ordinary skill in the art. However, registration or activation may not be required for all wireless networks 200, LANs or WLANs, as some networks may allow access without prior registration or activation. The computing device 100 may also be provisioned or configured to access one or more networks. Methods of provisioning services on a computing device 100 will be generally known to those skilled in the art, but as a non-limiting example, a request for registration may be sent from the computing device 100 to a registration server of a service (not shown). If the request is approved, the registration server may transmit to the computing device 100 a service book or similar data item containing data and instructions to enable the computing device 100 to provision the service. The service book, when received at the computing device 100, may be self-executing, and permits the user to enter account information relevant to the associated service. This information is then transmitted from the computing device 100 to a provisioning server of the service provider (not shown), which then creates a service account associated with the computing device 100. Provisioning may also be carried out in compliance with the OMA DM (Open Mobile Alliance Device Management) specification version 1.2 or its predecessor or successor versions, published by the Open Mobile Alliance Ltd.

As was discussed above the present teaching addresses issues associated with the displayed graphical user interface of such computing devices. These issues may arise due to difficulties in the user's visual acuity. In such a scenario the present teaching takes advantage of the fact that the addition of chromatic contrast aids in readability, especially for low-vision users. Whereas known arrangements use brightness or contrast alone, the present teaching uses a realisation that the colour sensitive cones in the retina are particularly sensitive to yellow light and preferentially displays portion of the graphical user interface using two colours; black and yellow.

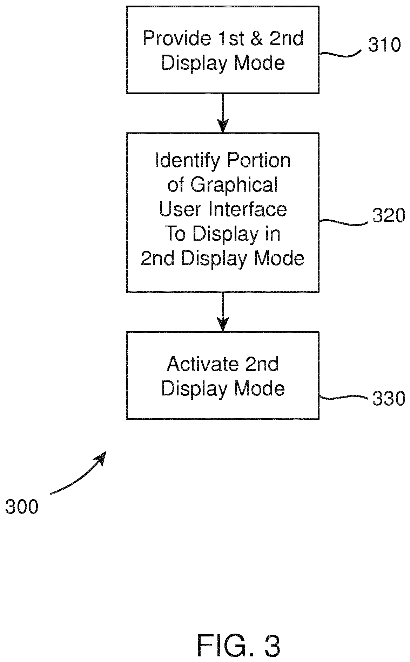

Other issues associated with difficulty regarding a displayed graphical user interface may also arise due to use of the devices in different ambient light combination- such as when the device is used indoors or outdoors. Any use of this two colour combination the present teaching improves the displayed graphical user interface by selectively displaying at least portions of the display in a two color, yellow and black combination. As exemplified with reference to Figure 3, the present teaching provides a method 300 of generating a graphical user interface on a display of a battery powered mobile telecommunication computing device.

The method comprises providing 310 for the display a first display mode and a second display mode. The first display mode makes use of a plurality of colour combinations. In the context of a full screen OLED display this would include all possible combinations within the RGB model that that display is capable of displaying. The second display mode operably uses only yellow and black in the display of graphical elements that are displayed using this display mode.

Having provided a device with this functionality, the method comprises identifying 320 at least a portion of the graphical user interface to display in the second display mode. This portion can be the entire display or subset regions of the display. Having identified or associated different portions of a displayed graphical user interface with the second display mode, the device is configured to activate 330 the second display mode to display that identified portion of the graphical user interface in the second display mode.

As the display screen of the device is optimally capable of displaying in full colour, the device is typically configured to default to displaying the graphical user interface using the first display mode. In order to effect the activation of the second display mode, the present teaching typically will provide the activation in response to an external stimulus. This external stimulus can be provided through a user interface of the device. For example devices are known to have device settings whereby a user can change device display settings such as brightness or contrast through a menu provided on the device. Within the context of the present teaching a menu option may be provided as part of the graphical user interface, which will allow a user activate or deactivate the second display mode. Having activated or deactivated the second display mode, the user may be provided with additional functionality such as the capacity to vary the brightness or contrast of the displayed yellow on black or black on yellow of the second display mode. The user may also be provided with the option to select whether the second display mode should display either the graphical elements in yellow on a black background or displays the graphical elements in black on a yellow background.

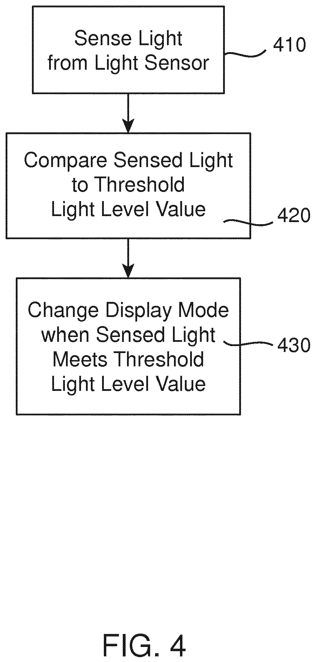

In another configuration which may be effected by a process such as that exemplified with reference to Figure 4, the external stimulus is a change in ambient light conditions as sensed by the device. In such a scenario, the method makes use of the light sensor 160 that was described above with reference to Figure 1. Where provided, the device is configured to continuously- either in an actual continuous fashion or at periodic intervals-sense light from the light sensor, 410. This sensed light gives an indication of the ambient light conditions within which the device is operating. The sensed light is compared against a threshold light level value which is a stored value indicative of when the device should switch to and from the second display mode, 420. On reaching this threshold, either going from low ambient light conditions to high ambient light conditions, or the other way around, the device is configured to switch the display to activate or deactivate the second display mode, 430.

In certain configurations this automatic change to the second display mode can be controlled via a user-override mechanism. In such a configuration, user interface controls may be provided to allow control of whether the device responds to the light sensor or not. Other configurations that may be provided include a user selectable set of options. For example, a user interface menu may be provided to allow a user determine or select one of the following:
1. Never enable second display mode
2. Enable second display mode in bright ambient light conditions.
3. Always enable second display mode
It will be appreciated that irrespective of the mechanism - either manual or automatic- as part of this switching, the device may be configured to selectively activate portions of the displayed GUI to adopt the second display mode or activate the entire displayed GUI to adopt the second display mode. In this way the identified at least a portion of the graphical user interface occupies the entire area of the display of the device such that the second display mode, when activated, is used for the entire display or the identified at least a portion of the graphical user interface occupies a subset region defined within the display of the device such that the second display mode, when activated, is used for that subset region and the first display mode is used for other regions of the display.

In the context of displaying only a portion of the GUI using the second display mode, it will be appreciated that the device is configured to use the first display mode and the second display mode simultaneously. This may have particular advantages for those users with low vision users as only only user interface elements such as navigation buttons in the action bar could be changed from white (a typical default color for the first display mode) to yellow. These transitions could be set to occur only when the ambient light sensor in the device detects a bright outdoor-like environment, i.e. above a threshold of 10000-15000 lux.

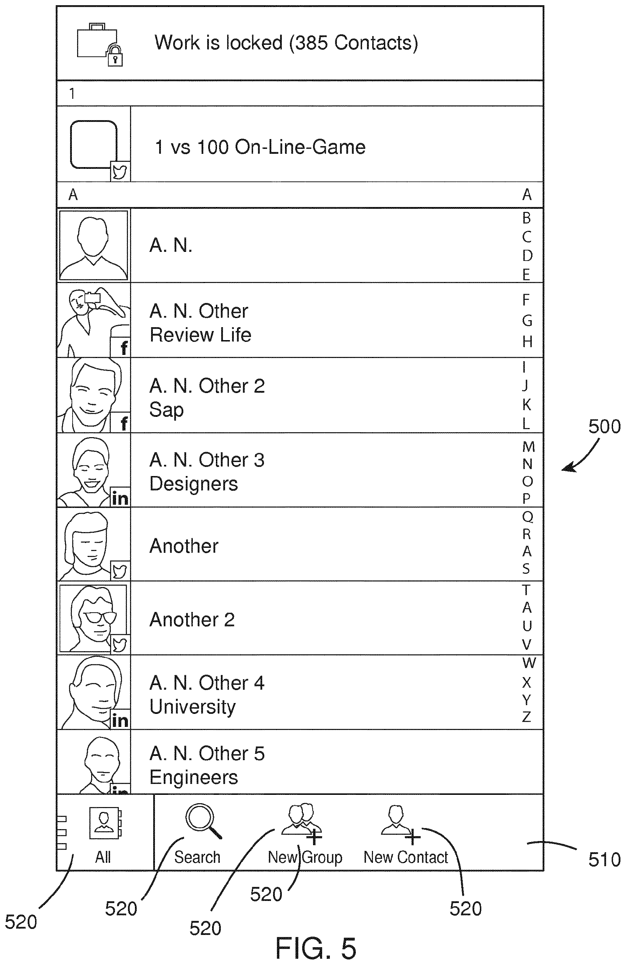

Figure 5 shows a screen shot of an example of a GUI 500 that is rendered on a display where the first display mode and the second display mode are used simultaneously. In this example a subset region 510 is defined within the overall GUI. This exemplary subset region comprises four navigation elements 520, such that the navigation elements are displayed in different colours to the other regions of the display. It will be appreciated that in this example all navigation elements displayed on the display are displayed using the second display mode. Other configurations could display a subset of all navigation elements using the second display mode.

It will be appreciated that the display area of these types of computing devices is limited such that not all of the content or functionality that may be accessed through the device may be currently visible on the display area of the graphical user interface. To provide a user with access to this additional function, it is necessary to first provide the user with knowledge of the existence of that function or additional data. The present teaching provides this knowledge through the presentation of these navigation elements 520 as contrasted elements within the overall GUI in a form that highlights these navigation elements to a user. Similarly to known navigation elements, once identified to the user, the user will initiate interaction through use of a user input mechanism that receives user input through user contact-primarily, manual manipulation-notionally these mechanisms may be considered as input mechanisms for detecting inputs either for cursor-based control or for touch-based control of the computing device 100. Cursor-based control, typically associated with pointing devices such as mice, permits the user to control the positioning of a cursor or other sprite displayed in a graphical user interface rendered on the display 110. When the cursor is positioned ("hovering") over a particular graphical user interface element, the input mechanism may be actuated (for example, by pressing a mouse button) to invoke a command associated with that element. Optical joysticks and trackpads may be used for cursor-based control. Touch-based control, typically associated with touchscreen displays 110, permits the user to more directly engage the graphical user interface elements displayed on the display 110 by touching or tapping the surface of the display 110 corresponding to that element. The touchscreen display 110 and its associated controller and processor 102 can be configured to also detect and identify gestures and multi-touch input (directional input and multiple concurrent touch input, respectively). A significant difference however between the instant teaching and prior implementations of navigation tools is that the present teaching highlights individual ones 520 of the navigation tools using a different display mode to other elements that are concurrently displayed on the GUI 500.

The computing device 100 may receive user input by means of one or more user input systems, such as a user input device or interface, including without limitation the keyboard 116, display 110 where the display is comprised in a touchscreen interface (referred to herein as a touchscreen display 110), microphone 120, trackball, buttons, trackpad, scroll wheel, optical joystick, rocker switch, and the like. Advantageously, the computing device 100 is provided with a touchscreen display 110. Several of these user input devices may be external to the computing device 100 itself; for example, a pointing device such as a mouse, trackball, tablet or touchpad may be provided as a peripheral component. In the case of a mobile device such as a smartphone or tablet computer, user input mechanisms are advantageously incorporated into the chassis of the computing device 100 itself for improved portability and mobility. For example, in a touchscreen computing device 100 such as a tablet or smartphone, the device 100 is provided not only with a touchscreen display 110, which may provide the main user input mechanism and permit alphanumeric data entry through display of an interactive virtual keyboard on the display 110, but also with one or more buttons, and/or an optical joystick or trackpad. These various user input devices and interfaces may be actuated by the user (for example, through the application of touch, pressure, and or directional movement) to control the operation of the computing device, for example to navigate through graphical user interfaces, menu structures, and the like, to select and initiate application or operating system commands for execution, to input data for processing or transmission by the computing device, or to change settings on the computing device.

While there are advantages to preferentially displaying navigation elements in the second display mode, other aspects of the present teaching could preferentially display certain windows or applications in the second display mode and other windows or applications in the first display mode. For example it is known on smartphones to provide a user with the capacity to simultaneously have a plurality of applications executing on the same device. Certain applications may be provided in the background and others are in the foreground. Foreground applications are those applications that the user is actively interfacing with at a particular moment in time. For example a user could be reading an email in an email application, and that application would be considered a foreground application whereas their previous browsing in a browsing window is in a background window. In one aspect of the present teaching, the device is configured to selectively switch between the first display mode and the second display mode when sensing that an application is moving from a foreground application to a background application. Another aspect may provide a pop-up notification which is displayed in the second display mode. For example, e.g. a calendar reminder or incoming message may be displayed using the second display mode as it considered urgent or conveying important information.

The embodiments herein have been described and illustrated primarily in relation to the provision of a high contrast mode in the context of an OLED display. Such a high contrast mode can be applied selectively to individual user interface elements within a display. Other arrangements may utilize a high contrast mode across the entire display. The activation of the high contrast mode can be effected through a manual user control. In another configuration the activation can be associated with an ambient light sensor to automatically change the contrast mode dependent on sensed ambient light conditions. In all aspects, the present teaching provides an improved user interface via a changed contrast mode that is selectively activated.

In a browser or other runtime environment such as those described above, user input detected (a user event) at one or more of the user input mechanisms provided on the device 100 may be passed to the processor 102 for determination of the type of detected input. In the case of directional input received from a pointing device or another cursor-based control mechanism such as a trackpad or optical joystick, the processor 102 receives raw data concerning the user event, such as an indication of the application of external force or contact, magnitude, directional, location, timing, and/or speed information, and determines from the raw data what type of user event occurred, such as a cursor event, mouse event or a touch event, which can include both gestures (comprising a series of touch events) and multitouch input (comprising a series of touch events, some of which may be concurrent) as well as single-touch inputs. In the case of a touch event, the touchscreen display controller 216 may process the raw data representative of the user input. The result of the processing of the processor 102 and/or controller 216 is passed to the current application, i.e. the application corresponding to the active screen currently displayed at the device 100 which can selectively activate the second display mode.

The taxonomy and models used to define user events and facilitate user input will be known to those skilled in the art. The foregoing embodiments thus provide systems and methods for provide contextual information within a display that facilitates data entry and yet minimizes processor activity.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits comprising custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rightsholder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method (300) of generating a graphical user interface on a display of a battery powered mobile communication computing device (100), the method comprising:
providing (310) for the display (110) a first display mode and a second display mode, the first display mode operably using a plurality of color combinations and the second display mode operably using only yellow and black;
identifying (320) at least a portion of the graphical user interface to display in the second display mode; and
activating (330) the second display mode (420, 430) to display that identified portion of the graphical user interface in the second display mode; wherein the second display mode is used for one of: displaying foreground applications, the device configured to determine activation of an application and its categorization as a foreground application and to provide for display of graphical elements in that foreground application using only the second display mode; displaying pop-up windows, the device configured to determine activation of an pop-up window and to provide for display of graphical elements in that pop-up window using only the second display mode.

2. The method of claim 1, wherein the second display mode is switched to the first display mode when the category of the foreground application is determined as moving to a background application.

3. The method of claim 1 wherein the device is configured to default to displaying the graphical user interface using the first display mode, the method comprising activating the second display mode in response to an external stimulus.

4. The method of claim 3 wherein the external stimulus is provided through a user interface of the device or wherein the external stimulus is a change in ambient light conditions sensed by the device.

5. The method of claim 4 wherein the user interface is the graphical user interface.

6. The method of any preceding claim wherein the graphical user interface comprises graphical elements displayed on a background and the second display mode displays either the graphical elements in yellow on a black background or displays the graphical elements in black on a yellow background.

7. The method of any preceding claim wherein the identified at least a portion of the graphical user interface occupies the entire area of the display of the device such that the second display mode, when activated, is used for the entire display.

8. The method of any preceding claim wherein the device is configured to use the first display mode and the second display mode simultaneously.

9. The method of claim 8 wherein the identified at least a portion of the graphical user interface occupies a subset region (510) defined within the display of the device such that the second display mode, when activated, is used for that subset region and the first display mode is used for other regions of the display.

10. The method of claim 9 wherein the subset region comprises navigation elements (520), such that the navigation elements are displayed in different colors to the other regions of the display.

11. The method of claim 10 wherein all navigation elements displayed on the display are displayed using the second display mode or wherein a subset of all navigation elements are displayed using the second display mode.

12. The method of any preceding claim wherein the display is one of:
a full color RGB display, the first color display mode configured to use multiple RGB color combinations;
an organic light emitting diode, OLED, display;
a touchscreen display.

13. A battery powered mobile communication computing device comprising a graphical user interface on a display of the device, the device adapted to execute the method of any preceding claim.

14. A computer program which, when executed by one or more processors (102) comprised in a battery (132) powered mobile communication computing device, the device comprising a graphical user interface on a display of the device, causes the device to carry out the method of any one of claims 1 to 12.

## Patentansprüche

1. Verfahren (300) zur Erzeugung einer grafischen Benutzeroberfläche auf einem Display eines batteriebetriebenen Mobilkommunikations-Rechengeräts (100), wobei das Verfahren umfasst:
Bereitstellen (310) eines ersten Anzeigemodus und eines zweiten Anzeigemodus für das Display (110), wobei der erste Anzeigemodus operativ eine Vielzahl von Farbkombinationen und der zweite Anzeigemodus operativ nur Gelb und Schwarz verwendet;
Identifizieren (320) von mindestens einem Teil der grafischen Benutzeroberfläche zur Anzeige im zweiten Anzeigemodus; und
Aktivieren (330) des zweiten Anzeigemodus (420, 430) zur Anzeige dieses identifizierten Teils der grafischen Benutzeroberfläche im zweiten Anzeigemodus;
wobei der zweite Anzeigemodus verwendet wird für eines von: Anzeigen von im Vordergrund laufenden Anwendungen, wobei das Gerät dazu konfiguriert ist, die Aktivierung einer Anwendung und ihrer Klassifizierung als im Vordergrund laufende Anwendung zu bestimmen sowie für die Anzeige von grafischen Elementen in dieser im Vordergrund laufenden Anwendung unter Verwendung von nur dem zweiten Anzeigemodus zu sorgen; Anzeigen von Popup-Fenstern, wobei das Gerät dazu konfiguriert ist, die Aktivierung eines Popup-Fensters zu bestimmen sowie für die Anzeige von grafischen Elementen in diesem Popup-Fenster unter Verwendung von nur dem zweiten Anzeigemodus zu sorgen.

2. Verfahren nach Anspruch 1, wobei der zweite Anzeigemodus in den ersten Anzeigemodus wechselt, wenn bestimmt wird, dass die Kategorie der im Vordergrund laufenden Anwendung in eine im Hintergrund laufende Anwendung umgestellt wird.

3. Verfahren nach Anspruch 1, wobei das Gerät konfiguriert ist, standardmäßig die grafische Benutzeroberfläche unter Verwendung des ersten Anzeigemodus anzuzeigen, wobei das Verfahren die Aktivierung des zweiten Anzeigemodus in Reaktion auf einen externen Stimulus umfasst.

4. Verfahren nach Anspruch 3, wobei der externe Stimulus über eine Benutzerschnittstelle des Geräts bereitgestellt wird oder wobei der externe Stimulus eine Änderung der vom Gerät erfassten Umgebungslichtbedingungen ist.

5. Verfahren nach Anspruch 4, wobei die Benutzerschnittstelle die grafische Benutzeroberfläche ist.

6. Verfahren nach einem der vorhergehenden Ansprüche, wobei die grafische Benutzeroberfläche grafische Elemente umfasst, die auf einem Hintergrund angezeigt werden, und der zweite Anzeigemodus entweder die grafischen Elemente in Gelb auf einem schwarzen Hintergrund anzeigt oder die grafischen Elemente in Schwarz auf einem gelben Hintergrund anzeigt.

7. Verfahren nach einem der vorhergehenden Ansprüche, wobei der identifizierte mindestens eine Teil der grafischen Benutzeroberfläche den gesamten Bereich des Displays des Geräts einnimmt, so dass der zweite Anzeigemodus bei Aktivierung für das gesamte Display verwendet wird.

8. Verfahren nach einem der vorhergehenden Ansprüche, wobei das Gerät so konfiguriert ist, dass es den ersten Anzeigemodus und den zweiten Anzeigemodus gleichzeitig verwendet.

9. Verfahren nach Anspruch 8, wobei der identifizierte mindestens eine Teil der grafischen Benutzeroberfläche einen Untermengenbereich (510) einnimmt, der im Display des Geräts definiert ist, so dass der zweite Anzeigemodus bei Aktivierung für diesen Untermengenbereich verwendet wird und der erste Anzeigemodus für andere Bereiche des Displays verwendet wird.

10. Verfahren nach Anspruch 9, wobei der Untermengenbereich Navigationselemente (520) umfasst, so dass die Navigationselemente in verschiedenen Farben in den anderen Bereichen des Displays angezeigt werden.

11. Verfahren nach Anspruch 10, wobei alle auf dem Display angezeigten Navigationselemente unter Verwendung des zweiten Anzeigemodus angezeigt werden oder wobei eine Teilmenge aller Navigationselemente mit Hilfe des zweiten Anzeigemodus angezeigt werden.

12. Verfahren nach einem der vorhergehenden Ansprüche, wobei das Display eines von folgenden ist:
ein vollfarbiges RGB-Display, wobei der erste Farbanzeigemodus zur Verwendung mehrerer RGB-Farbkombinationen konfiguriert ist;
ein OLED [organische Leuchtdiode]-Display
ein Touchscreen-Display.

13. Batteriebetriebenes Mobilkommunikations-Rechengerät, das eine grafische Benutzeroberfläche auf einem Display des Geräts umfasst, wobei das Gerät dafür ausgelegt ist, das Verfahren nach einem der vorhergehenden Ansprüche auszuführen.

14. Computerprogramm, das bei Ausführung durch einen oder mehrere in einem batterie(132)-betriebenen Mobilkommunikations-Rechengerät enthaltenen Prozessoren (102) - wobei das Gerät eine grafische Benutzeroberfläche auf einem Display des Geräts umfasst - bewirkt, dass das Gerät das Verfahren nach einem der Ansprüche 1 bis 12 ausführt.

## Revendications

1. Procédé (300) de génération d'une interface utilisateur graphique sur un dispositif d'affichage d'un dispositif informatique de communication mobile alimenté par batterie (100), le procédé comprenant :
fournir (310), pour le dispositif d'affichage (110), un premier mode d'affichage et un second mode d'affichage, le premier mode d'affichage utilisant de manière fonctionnelle une pluralité de combinaisons de couleurs et le second mode d'affichage utilisant de manière fonctionnelle uniquement le jaune et le noir ;
identifier (320) au moins une partie de l'interface utilisateur graphique en vue d'un affichage dans le second mode d'affichage ; et
activer (330) le second mode d'affichage (420, 430) pour afficher cette partie identifiée de l'interface utilisateur graphique dans le second mode d'affichage ;
le second mode d'affichage étant utilisé pour l'une des opérations parmi : afficher des applications de premier plan, le dispositif étant configuré pour déterminer l'activation d'une application et sa catégorisation en tant qu'application de premier plan et fournir un affichage d'éléments graphiques dans cette application de premier plan en utilisant uniquement le second mode d'affichage ; afficher des fenêtres en incrustation, le dispositif étant configuré pour déterminer l'activation d'une fenêtre en incrustation et pour fournir un affichage d'éléments graphiques dans cette fenêtre en incrustation en utilisant uniquement le second mode d'affichage.

2. Procédé selon la revendication 1, dans lequel le second mode d'affichage est commuté dans le premier mode d'affichage lorsque la catégorie de l'application de premier plan est déterminée comme se transformant en une application d'arrière-plan.

3. Procédé selon la revendication 1, dans lequel le dispositif est configuré pour afficher par défaut l'interface utilisateur graphique à l'aide du premier mode d'affichage, le procédé comprenant l'activation du second mode d'affichage en réponse à un stimulus externe.

4. Procédé selon la revendication 3, dans lequel le stimulus externe est fourni par l'intermédiaire d'une interface utilisateur du dispositif ou dans lequel le stimulus externe est un changement de conditions de lumière ambiante détectées par le dispositif.

5. Procédé selon la revendication 4, dans lequel l'interface utilisateur est l'interface utilisateur graphique.

6. Procédé selon une quelconque revendication précédente, dans lequel l'interface utilisateur graphique comprend des éléments graphiques affichés sur un arrière-plan et le second mode d'affichage soit affiche les éléments graphiques en jaune sur un arrière-plan noir, soit affiche les éléments graphiques en noir sur un arrière-plan jaune.

7. Procédé selon une quelconque revendication précédente, dans lequel l'au moins une partie identifiée de l'interface utilisateur graphique occupe la totalité de la zone du dispositif d'affichage du dispositif de telle sorte que le second mode d'affichage, lorsqu'il est activé, est utilisé pour la totalité du dispositif d'affichage.

8. Procédé selon une quelconque revendication précédente, dans lequel le dispositif est configuré pour utiliser le premier mode d'affichage et le second mode d'affichage simultanément.

9. Procédé selon la revendication 8, dans lequel l'au moins une partie identifiée de l'interface utilisateur graphique occupe une région de sous-ensemble (510) définie dans le dispositif d'affichage du dispositif de telle sorte que le second mode d'affichage, lorsqu'il est activé, est utilisé pour cette région de sous-ensemble et le premier mode d'affichage est utilisé pour d'autres régions du dispositif d'affichage.

10. Procédé selon la revendication 9, dans lequel la région de sous-ensemble comprend des éléments de navigation (520), de telle sorte que les éléments de navigation sont affichés dans différentes couleurs par rapport aux autres régions du dispositif d'affichage.

11. Procédé selon la revendication 10, dans lequel tous les éléments de navigation affichés sur le dispositif d'affichage sont affichés en utilisant le second mode d'affichage ou dans lequel un sous-ensemble de tous les éléments de navigation est affiché en utilisant le second mode d'affichage.

12. Procédé selon une quelconque revendication précédente, dans lequel le dispositif d'affichage est l'un parmi :
un dispositif d'affichage RVB tout en couleurs, le premier mode d'affichage en couleurs étant configuré pour utiliser de multiples combinaisons de couleurs RVB ;
un dispositif d'affichage à diodes électroluminescentes organiques, OLED ;
un dispositif d'affichage à écran tactile.

13. Dispositif informatique de communication mobile alimenté par batterie comprenant une interface utilisateur graphique sur un dispositif d'affichage du dispositif, le dispositif étant conçu pour exécuter le procédé selon une quelconque revendication précédente.

14. Programme d'ordinateur qui, lorsqu'il est exécuté par un ou plusieurs processeurs (102) compris dans un dispositif informatique de communication mobile alimenté par batterie (132), le dispositif comprenant une interface utilisateur graphique sur un dispositif d'affichage du dispositif, amène le dispositif à réaliser le procédé selon l'une quelconque des revendications 1 à 12.
